(19) Europäisches Patentamt

European Patent Office

Office européen des brevets

(11) **EP 2 056 306 A1**

(12) **DEMANDE DE BREVET EUROPEEN**

(43) Date de publication:
**06.05.2009 Bulletin 2009/19**

(51) Int Cl.:
**H01F 6/06** (2006.01) **H01L 39/00** (2006.01)
**H02N 15/04** (2006.01)

(21) Numéro de dépôt: **08167928.4**

(22) Date de dépôt: **30.10.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **31.10.2007 FR 0758748**

(71) Demandeur: **COMMISSARIAT A L'ENERGIE ATOMIQUE**
**75015 Paris (FR)**

(72) Inventeur: **Quettier, Lionel**
**91300 Massy (FR)**

(74) Mandataire: **Thévenet, Jean-Bruno et al**
**Cabinet Beau de Loménie**
**158, rue de l'Université**
**75340 Paris Cédex 07 (FR)**

(54) **Système magnétique pour la lévitation stable de substances diamagnétiques**

(57) Le système magnétique à symétrie de révolution invariant par rotation autour d'un axe de révolution (Oz), pour la création d'une zone de lévitation stable d'un matériau diamagnétique dans un volume essentiellement sphérique de centre (O') situé sur l'axe de révolution comprend un premier dispositif magnétique avec un solénoïde supraconducteur (11) et au moins un deuxième dispositif magnétique comprenant deux solénoïdes supraconducteurs (12, 13). Les dispositifs magnétiques sont dimensionnés pour créer au centre (O') de la zone de lévitation stable un gradient de champ tel que la composante verticale G du vecteur gradient de densité d'énergie magnétique ($\overline{grad}(B^2)$) présente une valeur au moins égale à la valeur G du module de la composante verticale du vecteur de densité d'énergie magnétique du matériau diamagnétique et la composante horizontale de ce vecteur gradient de densité d'énergie magnétique ($\overline{grad}(B^2)$) soit nulle ou quasi nulle.

FIG.1

EP 2 056 306 A1

**Description**

Domaine de l'invention

La présente invention concerne un système magnétique à symétrie de révolution invariant par rotation autour d'un axe de révolution (Oz), pour la création d'une zone de lévitation pour un matériau diamagnétique dans un volume utile essentiellement sphérique de centre O' situé sur ledit axe de révolution et de rayon R.

Art antérieur

Chaque élément d'un milieu matériel soumis à une induction acquiert une certaine aimantation. On peut ainsi classer les corps existants en trois grandes catégories selon leur réponse à l'application d'une induction magnétique :

- Les substances diamagnétiques, pour lesquelles le moment magnétique de réaction est opposé à l'induction appliquée. Ce phénomène étant intra-atomique ou intramoléculaire, il est indépendant de la température et d'ampleur très faible.
- Les substances paramagnétiques, pour lesquelles le moment magnétique de réaction est de même sens que l'induction appliquée. Cet effet est contrarié par l'agitation thermique. Le moment magnétique résultant dépend donc de la température (loi de Curie). Le comportement diamagnétique sous-jacent est ici masqué par le comportement paramagnétique.
- Les substances ferromagnétiques, qui acquièrent, sous l'action d'une induction initiale relativement faible, des moments magnétiques considérables de même sens, sous l'effet de phénomènes coopératifs.

Si on introduit un corps isotrope linéaire de perméabilité magnétique $\mu$ dans une induction magnétique $\vec{B} = \mu_0 \vec{H}$ (les sources du champ magnétique $\vec{H}$ sont en dehors du corps), celui-ci s'aimante et acquiert un moment magnétique volumique $\vec{M}$ défini par :

$$\vec{M} = \left(\frac{1}{\mu} - \frac{1}{\mu_0}\right)\vec{B} = \chi_m \vec{H} \qquad (1)$$

où $\mu$ est la perméabilité magnétique de la substance $\mu_0$ est la perméabilité magnétique du vide $\vec{H}$ est le vecteur champ magnétique au sein du matériau $\chi_m$ est la susceptibilité magnétique de la substance.

Dans le cas d'une particule de volume V assez petit pour que $\overrightarrow{grad}(H^2)$ e varie pas sur la particule, la force magnétique $\vec{F_m}$ est donnée par :

$$\vec{F_m} = \frac{1}{2}\mu_0 V \chi_m \overrightarrow{grad}\left(H^2\right) \qquad (2)$$

Pour un matériau ferromagnétique saturé d'aimantation de saturation $M_s$, l'expression de la force s'écrit :

$$\vec{F_m} = \mu_0 V M_s \overrightarrow{grad}\left(\left\|\vec{H}\right\|\right) \qquad (3)$$

Si l'on désigne par G le module de la composante verticale du vecteur gradient de densité d'énergie magnétique $\mu_0^2 \overrightarrow{grad}\left(H^2\right)$ ou vecteur $\overrightarrow{grad}(B^2)$ (unité $T^2$/m), la condition pour compenser la force due à la gravité s'écrit :

$$G = \frac{\mu_0 \rho}{\left|\chi_m\right|} \left\|\vec{g}\right\| \tag{4}$$

où $\rho$ est la masse volumique pour le matériau considéré. $\vec{g}$ est le vecteur gravité

L'expression de la force magnétique agissant sur une substance dia- ou paramagnétique indique que la substance est attirée vers les champs plus faibles si elle est diamagnétique ($\chi_m < 0$ de l'ordre de $10^{-5}$ à $10^{-6}$) et vers les champs les plus intenses si elle est paramagnétique ($\chi_m > 0$ de l'ordre de $10^{-3}$ à $10^{-5}$ à température ambiante).

Il est donc possible de faire léviter une substance dia ou paramagnétique en compensant la gravité par des forces magnétiques sous réserve de pouvoir générer un champ de force suffisant.

Il convient cependant de bien souligner la différence entre la lévitation diamagnétique et l'environnement gravité zéro obtenu par exemple dans les navettes spatiales. En effet, la gravité zéro est obtenue en orbite uniquement par des effets inertiels, c'est à dire que la compensation agit sur l'ensemble du corps et chacun de ses constituants (noyaux et électrons). En revanche, dans le cadre de la lévitation magnétique, les forces magnétiques agissent essentiellement sur les électrons et c'est uniquement la grande cohésion des atomes qui fait que les noyaux, et donc le reste du corps, «suivent» et lévitent. Dans un système physique associant plusieurs matériaux de susceptibilités différentes, la compensation ne peut être effective que pour le matériau obéissant à cette condition.

Excepté dans les systèmes de séparation magnétique où l'on recherche d'abord des $\overrightarrow{grad}(B^2)$ avec un module très élevé sur de toutes petites zones, toutes les applications de la lévitation ont aussi besoin d'une bonne homogénéité de force dans la plus grande zone utile. Pour les séparateurs magnétiques, l'utilisation d'aimant supraconducteur n'est pas nécessaire, et des électroaimants traditionnels, éventuellement associés avec des matériaux ferromagnétiques pour créer localement des pics de force, suffisent largement.

Dans les expériences utilisant la compensation de la gravité par la force magnétique, la définition de l'homogénéité acceptable dans la zone utile dépend de l'application. Néanmoins, on cherche au minimum à atteindre une gravité résiduelle de l'ordre de 1%.

En fait, il existe une relation entre les paramètres champ magnétique, taille de zone et homogénéité. Celle-ci se démontre à partir des équations de Maxwell qui régissent le champ magnétique. L'équation reliant ces différents paramètres a été démontrée pour des systèmes invariants par translation, et pour des systèmes axisymétriques (voir les références [1] et [2]).

Pour information, on rappelle ici l'équation valable dans le cas axisymétrique :

Si $B_0$ représente l'induction magnétique au centre de la zone de lévitation, $R$ le rayon de la zone utile et $\varepsilon_r$ et $\varepsilon_z$ les homogénéités radiale et verticale, on a la relation :

$$B_0 = \frac{1}{2}\sqrt{\frac{3GR}{2\varepsilon_r + \varepsilon_z}} \tag{5}$$

Cette relation, qui découle directement des équations de Maxwell, montre que les paramètres d'un problème de lévitation sont liés. En d'autres termes, si on fixe, pour un matériau donné, le volume utile et les homogénéités souhaités, on en déduit directement l'ordre de grandeur de l'induction qu'il est nécessaire de créer dans la zone pour réaliser la lévitation avec ces contraintes.

Il reste ensuite à résoudre le problème magnétostatique inverse, c'est-à-dire trouver le dispositif magnétique qui permet de générer la carte de champ magnétique requise.

Quelques propriétés remarquables du champ de vecteur $\overrightarrow{grad}(B^2)$ peuvent être déduites des références [1] et [2]:

La compensation parfaite de la gravité n'est possible qu'en un point donné de l'espace vide sans courant. Les dispositifs magnétiques envisagés pour la lévitation ne permettent donc que la génération d'un champ de force quasi uniforme, mais ceci suffit dans la plupart des applications.

Dans le cas ou le système magnétique est linéaire (pas de matériau ferromagnétique), la valeur de $G$ varie quadratiquement en fonction du courant d'alimentation.

Enfin, l'homogénéité du champ de force est indépendante de la valeur du courant, ce qui veut dire qu'un dispositif permettant de faire léviter de l'eau avec 1% d'uniformité dans un volume donné permettra en ajustant le courant de l'alimentation de faire léviter n'importe quelle autre substance diamagnétique dans le même volume et avec la même uniformité de champ de force.

Depuis les premiers travaux de Beaugnon et Tournier, tous les travaux menés jusqu'à aujourd'hui pour produire une lévitation utilisent un ou plusieurs solénoïdes concentriques et coaxiaux (voir à titre d'exemple les références [3], [4] et [5]). Il existe en effet une zone naturelle de lévitation pour tout solénoïde, et l'uniformité de la force magnétique obtenue dépend des paramètres géométriques de l'aimant.

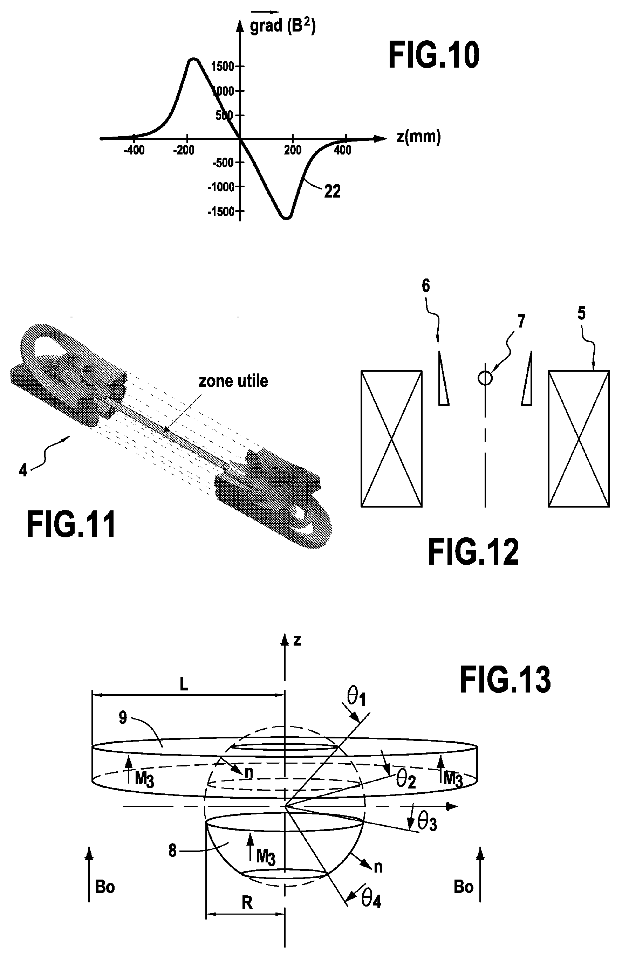

Si l'on considère la courbe donnant l'allure de la composante verticale de $\overrightarrow{grad}(B^2)$ en fonction de la valeur de z sur l'axe vertical d'un solénoïde, (voir la courbe 22 sur la figure 10), on constate qu'il existe deux extrema, un au bas de l'aimant (z<0) où la composante verticale de $\overrightarrow{grad}(B^2)$ est positive, et un au sommet de l'aimant (z>0) où elle est négative. Compte tenu du signe de la susceptibilité (négative pour les substances diamagnétiques et positive pour les substances paramagnétiques), il existe une zone naturelle de lévitation des substances diamagnétiques au sommet de l'aimant, et, symétriquement, une zone pour les substances paramagnétiques en bas.

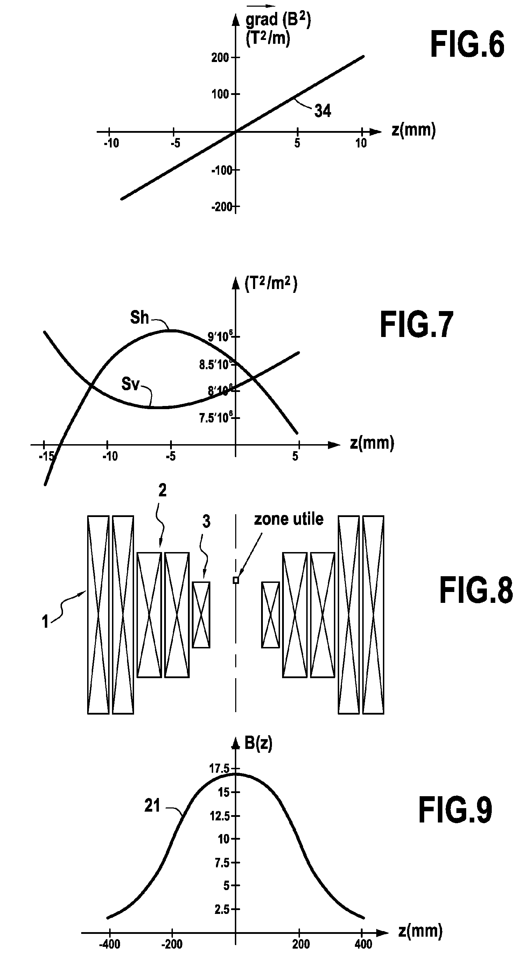

La zone utile représentée sur la figure 8 montrant un dispositif de lévitation de l'art antérieur utilisant des solénoïdes concentriques 1, 2, 3 est valable pour un corps diamagnétique.

La Figure 9 montre l'allure de l'induction magnétique B(z) sur l'axe vertical d'un solénoïde tel que l'un des solénoïdes supraconducteurs qui sont mis en oeuvre dans le dispositif de la figure 8.

Le brevet selon la référence [7] présente différentes configurations magnétiques à symétrie de révolution destinées à la création d'une force magnétique uniforme. Un catalogue de plusieurs configurations associant un aimant principal et des aimants auxiliaires est proposé, revendiquant l'obtention d'une composante verticale de la force magnétique constante, et d'une composante horizontale voisine de zéro. Il n'est toutefois donné aucune méthode de calcul et/ou de dimensionnement des aimants pour atteindre ces caractéristiques magnétiques et ce document ne prend pas en compte les critères de stabilité de l'équilibre.

Un autre brevet (voir la référence [8]) traite de l'utilisation d'un solénoïde pour réaliser la lévitation diamagnétique, mais sans proposer de solution nouvelle par rapport à celles déjà connues depuis le début des expériences de lévitation et sans non plus prendre en compte les critères de stabilité de l'équilibre.

D'autres solutions alternatives ont également été divulguées: elles concernent en particulier des structures magnétiques invariantes par translation (géométrie proche des électroaimants d'accélérateurs), comme dans l'exemple du dispositif magnétique 4 de la figure 11, prévu pour la lévitation de cibles de deutérium dans le cadre de la fusion par confinement inertiel. L'intérêt des structures invariantes par translation est que la zone utile n'est pas limitée par le rayon intérieur du bobinage comme c'est le cas dans une géométrie axisymétrique.

Les solutions alternatives comprennent également l'utilisation de matériaux ferromagnétiques associés à des solénoïdes supraconducteurs, comme dans le dispositif de la figure 12 comportant un solénoïde 5 à l'intérieur duquel est placé un insert conique 6 en matériau ferromagnétique qui est saturé par le champ de l'électro-aimant afin d'améliorer l'uniformité du champ de force magnétique dans la zone utile 7 pour les substances diamagnétiques.

Le dispositif de la figure 13 montre également l'utilisation d'inserts ferromagnétiques axisymétriques 8, 9 placés au centre d'un solénoïde d'axe z pour la création d'un gradient de densité d'énergie magnétique $\overrightarrow{grad}(B^2)$.

Là encore, dans les solutions illustrées sur les figures 11 à 13, aucune ne propose de méthode de dimensionnement intégrant des critères de stabilité de l'équilibre.

Objet et description succincte de l'invention

L'invention vise à remédier aux inconvénients précités des dispositifs de l'art antérieur et à permettre de définir un système magnétique capable de générer un champ de force magnétique quasi uniforme, destiné à la lévitation stable d'un corps diamagnétique.

Ces buts sont atteints, conformément à l'invention, grâce à un système magnétique à symétrie de révolution invariant par rotation autour d'un axe de révolution (Oz), pour la création d'une zone de lévitation pour un matériau diamagnétique dans un volume utile essentiellement sphérique de centre O' situé sur ledit axe de révolution et de rayon R, ce système comportant un premier dispositif magnétique adapté pour créer, dans ledit volume utile pour la lévitation, un champ de force magnétique exerçant sur le matériau diamagnétique un champ de force uniforme d'amplitude égale et de direction opposée à la force de gravité s'exerçant sur ce matériau diamagnétique, caractérisé en ce qu'il comprend en outre au moins un deuxième dispositif magnétique comprenant au moins deux solénoïdes supraconducteurs adaptés pour créer, au centre O' de la zone de lévitation stable, un gradient de champ dont la valeur est sensiblement égale à la moitié du rapport de la composante verticale du vecteur gradient de densité d'énergie magnétique $\overrightarrow{grad}(B^2)$ sur l'induction magnétique B(z) au point O', en ce que les premier et deuxième dispositifs magnétiques sont dimensionnés pour créer au centre O' de ladite zone de lévitation stable un gradient de champ tel que la composante verticale G du vecteur gradient de densité d'énergie magnétique $(\overrightarrow{grad}(B^2))$ présente une valeur au moins égale à la valeur G du module de la composante verticale du vecteur de densité d'énergie magnétique dudit matériau diamagnétique et la composante horizontale de ce vecteur gradient de densité d'énergie magnétique $(\overrightarrow{grad}(B^2))$ soit nulle ou quasi nulle, et en ce que les premier et deuxième dispositifs magnétiques sont tels que les dérivées secondes $\alpha_2$ de l'induction magnétique B(z) par rapport à z au centre O' de ladite zone de lévitation stable sont nulles tandis que les dérivées premières $\alpha_i$ de l'induction magnétique B(z) par rapport à z au centre O' de la zone de lévitation stable sont différentes de zéro afin de garantir les conditions de stabilité horizontale et de stabilité verticale de l'équilibre de la lévitation d'un matériau diamagnétique dans ladite zone de lévitation stable.

Le premier dispositif magnétique comprend au moins un solénoïde supraconducteur pour créer ledit champ de force magnétique présentant un centre O' de ladite zone de limitation, une induction magnétique B(z) dont la valeur est supérieure à une valeur

$$B_0 = \frac{1}{2}\sqrt{\frac{3GR}{2\varepsilon_r + \varepsilon_z}}$$

où R est le rayon de la zone utile, $\varepsilon_r$ et $\varepsilon_z$ sont les homogénéités radiale et verticale et G est le module de la composante verticale du vecteur gradient de densité d'énergie magnétique dudit matériau diamagnétique, avec $G = \frac{\mu_0\rho}{|\chi_m|}\left\|\vec{g}\right\|$,

où $\mu_0$ est la perméabilité magnétique du vide, $\chi_m$ est la susceptibilité magnétique du matériau diamagnétique, p est la masse volumique dudit matériau et g est le vecteur gravité.

Par l'expression « les dérivées premières ($\alpha_1$) de l'induction magnétique B(z) par rapport à z au centre O' de la zone de lévitation stable sont différentes de zéro », on entend que ces dérivées premières sont suffisamment éloignées de zéro pour que les non homogénéités de fabrication ne rendent pas les équations [18] et [19] non vérifiées.

À titre d'exemple, pour l'eau et certains corps diamagnétiques de propriétés comparables, la valeur

$G = \frac{\mu_0\rho}{|\chi_m|}\left\|\vec{g}\right\|$ vaut 2800T$^2$/m.

Selon un premier mode de réalisation possible, le premier dispositif magnétique comprend un premier solénoïde supraconducteur à symétrie de révolution autour dudit axe de révolution $O_z$ avec un plan médian dont l'intersection avec ledit axe de révolution $O_z$ est située sur un point O distinct du centre O' de ladite zone de lévitation stable, ledit premier solénoïde supraconducteur étant adapté pour créer ledit champ de force magnétique quasi homogène et le point O' choisi pour la lévitation étant le point de l'axe de révolution $O_z$ pour lequel la dérivée seconde $\alpha_2$ de l'induction magnétique B(z) par rapport à z est nulle, et en ce que le deuxième dispositif magnétique comprend des deuxième et troisième solénoïdes supraconducteurs à symétrie de révolution autour dudit axe de révolution $O_z$ et disposés symétriquement par rapport à un plan perpendiculaire à l'axe de révolution $O_z$ et dont l'intersection avec cet axe de révolution $O_z$ est située au centre O' de ladite zone de lévitation stable, lesdits deuxième et troisième solénoïdes supraconducteurs étant placés en configuration de Helmholtz et alimentés en courant en sens opposés de manière à créer au centre O' de ladite zone de lévitation stable ledit gradient de champ permettant d'obtenir l'annulation de la dérivée seconde $\alpha_2$ de l'induction magnétique B(z) par rapport à z, de telle sorte que soient respectées lesdites conditions de stabilité horizontale et de stabilité verticale de l'équilibre de la lévitation d'un matériau diamagnétique dans ladite zone de lévitation stable.

Ainsi le premier solénoïde détermine un point où $\alpha_2 = 0$, que l'on fait coïncider avec l'endroit où se trouve le volume de matière diamagnétique à faire léviter. Et le second solénoïde permet d'obtenir en ce même point $\alpha_2 = 0$ grâce à la configuration de Helmoltz qu'il constitue avec le troisième solénoïde.

Dans ce cas, le premier solénoïde peut comprendre un bobinage hybride utilisant des bobines de type Bitter pour créer un champ de force magnétique quasi homogène présentant une induction magnétique B(z) dont la valeur,

au centre O de ce premier solénoïde, est supérieure ou égale à $B_0 = \frac{1}{2}\sqrt{\frac{3GR}{2\varepsilon_r + \varepsilon_z}}$ .

Dans le cas particulier de l'eau, et de tout autre corps diamagnétique, ayant une susceptibilité magnétique massique proche de celle de l'eau, l'équation [5] conduit à une valeur de l'induction B au moins égale à 16,5 T au centre O du premier solénoïde pour un volume essentiellement sphérique, sensiblement égal à 1 cm$^3$, dans lequel l'homogénéité du champ de force magnétique est inférieure ou égale à 2% dans les directions horizontale et verticale.

Les deuxième et troisième solénoïdes supraconducteurs sont bobinés en utilisant des matériaux supraconducteurs aptes à rester supraconducteurs dans les conditions fonctionnelles imposées.

Avantageusement, les deuxième et troisième solénoïdes supraconducteurs sont bobinés en utilisant des matériaux supraconducteurs à haute température critique.

Selon un autre mode de réalisation possible, les premier et deuxième dispositifs magnétiques comprennent des premier, deuxième et troisième solénoïdes supraconducteurs superposés et présentant chacun une symétrie de révolution autour dudit axe de révolution $O_z$, le deuxième solénoïde supraconducteur constituant un solénoïde intermédiaire situé au niveau du centre O' de la zone de lévitation stable, les deuxième et troisième solénoïdes supraconducteurs présentant un rayon extérieur très supérieur à celui du premier solénoïde supraconducteur tandis que les hauteurs des premier, deuxième et troisième solénoïdes supraconducteurs selon l'axe de révolution $O_z$ présentent des valeurs égales ou voisines, de telle sorte que le champ de force magnétique, le gradient de champ et les conditions de stabilité horizontale et verticale de l'équilibre de la lévitation d'un matériau diamagnétique dans ladite zone de lévitation stable sont créés par l'ensemble des premier, deuxième et troisième solénoïdes supraconducteurs.

Dans ce cas, avantageusement, les premier, deuxième et troisième solénoïdes supraconducteurs sont en $Nb_3Sn$.

Le système magnétique selon l'invention est adapté à la lévitation stable d'un matériau diamagnétique constitué par de l'eau. Elle peut également convenir à des matériaux diamagnétiques dont le comportement est très proche de celui de l'eau en ce qui concerne le résultat de cette équation [5], ou dont la différence de comportement magnétique et gravitationnel avec l'eau peut être compensée par un ajustement du courant des bobinages, le courant ainsi ajusté restant inférieur au courant critique du matériau supraconducteur.

Pour chaque matériau, cette valeur du module de B est déterminée en fonction de la valeur de G telle que définie lors de l'équation [4].

Le système magnétique selon l'invention est ainsi adapté à la lévitation stable d'un matériau diamagnétique constitué par de l'eau ou une solution aqueuse, dont la valeur G dudit module de la composante verticale du vecteur de densité d'énergie magnétique dudit matériau diamagnétique s'écarte de -2800 $T^2$/m d'une valeur qui est compensée par une modification du courant dans lesdits solénoïdes n'entraînant pas une transition de l'état supraconducteur à l'état normal d'un des éléments supraconducteurs du système magnétique.

Toutefois, le système magnétique selon l'invention peut également être appliqué à la lévitation stable d'autres substances diamagnétiques, telles que par exemple l'hélium liquide ou l'azote liquide, en ajustant le courant de l'alimentation des solénoïdes dans les limites compatibles avec le maintien de la supraconductivité.

Brève description des dessins

D'autres caractéristiques et avantages de l'invention ressortiront de la description suivante de modes particuliers de réalisation, donnés à titre d'exemples, en référence aux dessins annexés, sur lesquels :

- la figure 1 est une vue schématique en demi-coupe axiale d'un système magnétique selon un premier mode de réalisation de l'invention,
- la figure 2 est une vue schématique en demi-coupe axiale d'un système magnétique selon un deuxième mode de réalisation de l'invention,
- la figure 3 montre une courbe donnant l'allure de l'induction magnétique sur l'axe de révolution d'un système magnétique selon l'invention,
- la figure 4 montre une courbe donnant la composante verticale du gradient de densité d'énergie magnétique sur l'axe de révolution d'un système magnétique selon l'invention,
- la figure 5 montre une portion agrandie de la courbe de la figure 4,
- la figure 6 montre une courbe donnant la composante horizontale du gradient de densité d'énergie magnétique en fonction du rayon pour un système magnétique selon l'invention,
- la figure 7 montre deux courbes donnant les conditions de stabilité sur l'axe de révolution d'un système magnétique selon l'invention,
- la figure 8 est une vue schématique en coupe axiale d'un système magnétique selon l'art antérieur avec des solénoïdes supraconducteurs concentriques,
- la figure 9 montre une courbe donnant l'allure de l'induction magnétique sur l'axe de révolution d'un système magnétique selon la figure 8,
- la figure 10 montre une courbe donnant l'allure de la composante verticale du gradient de densité d'énergie magnétique sur l'axe de révolution d'un système magnétique selon la figure 8,
- la figure 11 est une vue schématique en perspective d'un dispositif magnétique connu à structure invariante par translation pour la lévitation de cibles de deutérium,
- la figure 12 est une vue schématique en coupe axiale d'un dispositif magnétique connu utilisant un insert ferromagnétique conique placé à l'intérieur d'un solénoïde, et

- la figure 13 est une vue schématique en coupe axiale d'un dispositif magnétique connu utilisant des inserts ferromagnétiques axisymétriques placés à l'intérieur d'un solénoïde.

Description détaillée de modes particuliers de réalisation de l'invention

On décrira ci-dessous un procédé permettant de définir les caractéristiques principales d'un ensemble de bobinages ayant pour but de générer un champ de force magnétique quasi uniforme destiné à la lévitation stable d'un corps diamagnétique.

On suppose le problème de lévitation bien défini, *i.e.* les valeurs de G, $B_0$, $R$, $\varepsilon_r$ et $\varepsilon_z$ (formule 5) clairement identifiées. Ceci signifie que sont définis explicitement le matériau à faire léviter, le volume souhaité, et l'homogénéité verticale et horizontale du vecteur gravité résiduelle. Le procédé décrit ci-dessous concerne les dispositifs magnétiques à symétrie de révolution, invariant par rotation autour de l'axe Oz.

Le vecteur champ magnétique $\vec{B}$ est régi par les équations de Maxwell, et peut s'écrire dans le repère ,$(O,\vec{u}_r, \vec{u}_\theta,\vec{u}_z)$ compte tenu des symétries existantes, et s'exprimer à partir de ses deux composantes verticales $B_z$ et $B_r$ qui s'écrivent sous forme d'un développement limité autour d'un point P. Au voisinage de P, on a les développements suivants à l'ordre 2:

$$B_r(r,z) = B_r(0,0) + \frac{\partial B_r}{\partial r}\bigg|_{(0,0)} r + \frac{\partial B_r}{\partial z}\bigg|_{(0,0)} z$$

$$+ \frac{1}{2}\left( \frac{\partial^2 B_r}{\partial r^2}\bigg|_{(0,0)} r^2 + 2\frac{\partial^2 B_r}{\partial r \partial z}\bigg|_{(0,0)} rz + \frac{\partial^2 B_r}{\partial z^2}\bigg|_{(0,0)} z^2 \right) \qquad (6)$$

$$B_z(r,z) = B_z(0,0) + \frac{\partial B_z}{\partial r}\bigg|_{(0,0)} r + \frac{\partial B_z}{\partial z}\bigg|_{(0,0)} z$$

$$+ \frac{1}{2}\left( \frac{\partial^2 B_z}{\partial r^2}\bigg|_{(0,0)} r^2 + 2\frac{\partial^2 B_z}{\partial r \partial z}\bigg|_{(0,0)} rz + \frac{\partial^2 B_z}{\partial z^2}\bigg|_{(0,0)} z^2 \right) \qquad (7)$$

En dehors de toute source de courant, l'induction magnétique $\vec{B}$ vérifie $\vec{rot}(\vec{B}) = \vec{0}$ et $\mathrm{div}(\vec{B}) = 0$, ce qui conduit à:

$$\frac{\partial B_r}{\partial z} = \frac{\partial B_z}{\partial r} \qquad (8)$$

$$B_r + r\left( \frac{\partial B_r}{\partial r} + \frac{\partial B_z}{\partial z} \right) = 0 \quad . \qquad (9)$$

En définissant $\alpha_i = \frac{1}{i!}\frac{\partial^i B_z}{\partial z^i}\bigg|_{(0,0)}$, et en choisissant que $\vec{B}$ est colinéaire au vecteur $\vec{u}_z$, il est possible d'écrire au deuxième ordre:

$$B_r(r,z) = -\frac{1}{2}\alpha_1 r - \alpha_2 rz \qquad (10)$$

$$B_z(r,z) = \alpha_0 + \alpha_1 z + \alpha_2 \left( z^2 - \frac{r^2}{2} \right) \qquad (11)$$

En définissant $\vec{G}(\vec{X}) = \overrightarrow{\mathrm{grad}}(\overline{B^2})|\vec{X}$ où $\vec{X}$ est vecteur de $\mathfrak{R}^3$ , on a la relation suivante dans le cas axisymétrique :

$$\vec{G} = 2\left( B_r \overrightarrow{\mathrm{grad}}(B_r) + B_z \overrightarrow{\mathrm{grad}}(B_z) \right) \qquad (12)$$

Ce qui donne au premier ordre l'expression suivante pour le vecteur $\vec{G}$:

$$\vec{G}(r,z) = \left( \frac{1}{2}\alpha_1^2 - 2\alpha_0\alpha_2 \right) r\vec{u}_r$$
$$+ \left( 2\alpha_0\alpha_1 + \left( 2\alpha_1^2 + 4\alpha_0\alpha_2 \right)z \right)\vec{u}_z \qquad (13)$$

Dans les problèmes de lévitation magnétique, on définit la variable $\vec{\varepsilon}$, « vecteur homogénéité résiduelle » qui traduit l'imperfection de la compensation du vecteur gravité:

$$\vec{\varepsilon}(\vec{r}) = \frac{\vec{G}(\vec{r}) - \vec{G}(\vec{0})}{G_0} \qquad (14)$$

où $\vec{r}$ est le vecteur OP, et $|\vec{G}(\vec{0})| = G_0$. $\varepsilon_r = |\vec{\varepsilon}(R\vec{u}_r)|$ définit l'homogénéité radiale et $\varepsilon_z = |\vec{\varepsilon}(R_z)|$ l'homogénéité verticale.
Les homogénéités radiale et verticale sur la surface d'un domaine sphérique de rayon R peuvent donc s'écrire:

$$\varepsilon_r = \frac{\alpha_1^2 - 4\alpha_0\alpha_2}{4\alpha_0\alpha_1} R \qquad (15)$$

et

$$\varepsilon_z = \frac{\alpha_1^2 + 2\alpha_0\alpha_2}{\alpha_0\alpha_1} R \qquad (16)$$

Si $B_0$ représente l'induction magnétique au centre de la zone de lévitation, R le rayon de la zone utile et $\varepsilon_r$ et $\varepsilon_z$ les homogénéités radiale et verticale, on aboutit ainsi à la relation :

$$B_0 = \frac{1}{2}\sqrt{\frac{3GR}{2\varepsilon_r + \varepsilon_z}} \qquad (17)$$

Dans le cas de la lévitation d'un matériau diamagnétique, les équations de stabilité de l'équilibre sont données par M. Berry et A. Geim dans la référence [5] :

$$\left(\frac{\partial B_z}{\partial z}\right)^2 + B_z\,\frac{\partial^2 B_z}{\partial z^2} > 0 \ \text{(Stabilité horizontale)} \tag{18}$$

$$\left(\frac{\partial B_z}{\partial z}\right)^2 - 2B_z\,\frac{\partial^2 B_z}{\partial z^2} > 0 \ \text{(Stabilité verticale)} \tag{19}$$

Ces deux équations se mettent sous la forme suivante en utilisant les notations définies précédemment:

$$\alpha_1^2 + \frac{1}{2}\alpha_0\alpha_2 > 0 \tag{20}$$

$$\alpha_1^2 - \alpha_0\alpha_2 > 0 \tag{21}$$

Une condition suffisante pour vérifier ces deux conditions de stabilités verticale et horizontale est d'annuler au point de lévitation les dérivées secondes de $B_z$ par rapport à z ($\alpha_2$).

Ceci conduit donc à la définition d'un système magnétique utilisant au moins deux solénoïdes. On donnera ci-dessous des exemples de systèmes magnétiques dimensionnés en utilisant cette méthode, afin d'assurer la lévitation stable d'une substance diamagnétique.

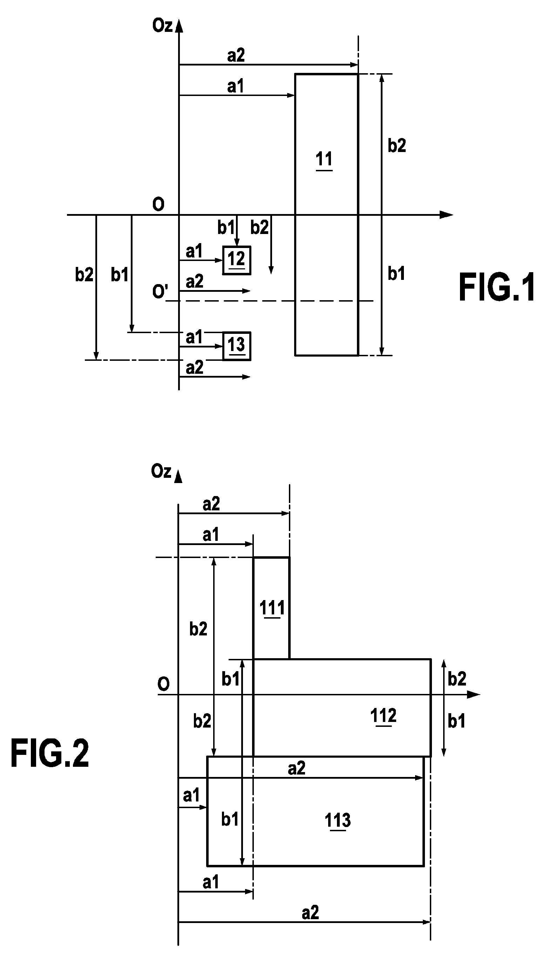

Selon un premier exemple de réalisation, illustré sur la figure 1, qui prend en compte l'hypothèse où le système est linéaire en fonction du courant (pas de matériau magnétique saturé), et selon la méthode exposée précédemment, on procède à la superposition d'au moins deux systèmes magnétiques :

1/ un premier ensemble magnétique (utilisant au moins un solénoïde 11) créant le champ magnétique $B_o$.

Pour des raisons de symétrie, il existe sur l'axe vertical d'un solénoïde, au moins un point O' où $\alpha_2 = 0$. Sauf cas particuliers de la configuration dite de Helmholtz (pour deux bobines) ou de toute autre association de solénoïdes spécialement dimensionnés avec cette contrainte, cette relation n'est pas vérifiée au centre O dans le plan médian d'un bobinage à symétrie de révolution. Si le point O' est différent de O, on a également $\alpha_1 \neq 0$ en O'.

2/ un deuxième ensemble magnétique créant un gradient de champ (terme $\alpha_1$ du développement).

La solution la plus simple est d'utiliser deux solénoïdes 12, 13, alimentés en sens opposés, placés dans une configuration bien connue en magnétisme pour les deux solénoïdes afin d'obtenir $\alpha_2 = 0$ , en utilisant des bobines de Helmholtz.

Les bobines dites de Helmholtz sont deux solénoïdes, alimentés par un courant de même sens, et elles permettent d'obtenir en leur centre (repéré par O' sur la figure 1) un champ magnétique homogène car leur géométrie et leur positionnement imposent $\alpha_2 = 0$. Dans le cas de la présente invention, on utilise la configuration des bobines de Helmholtz pour les deux solénoïdes 12 et 13, mais on les alimente en sens opposés, ce qui permet de garantir $\alpha_2 = 0$, tout en générant un gradient de champ.

Par superposition des deux systèmes (solénoïde 11 et solénoïdes 12 et 13), on obtient ainsi un dispositif magnétique, qui permet d'une part de créer une force magnétique par la superposition d'un champ magnétique homogène et d'un gradient de champ, et d'autre part de garantir la stabilité de l'équilibre par l'annulation de $\alpha_2$ en O'.

L'exemple ci-dessous montre comment, pour un solénoïde 11 donné, de centre O, on peut ainsi aboutir à une configuration magnétique qui permette la lévitation stable d'une substance diamagnétique en O', point où la dérivée seconde du champ magnétique total s'annule.

Il existe ainsi une zone de lévitation stable pour un corps diamagnétique autour du point O'. La valeur de force magnétique au point O' dépend des paramètres des solénoïdes 11, 12 et 13.

Les valeurs du tableau suivant, donnent un exemple de configuration magnétique obtenue avec un solénoïde principal 11, créant en son centre près de 17,4 T (bobinage hybride utilisant des bobines de type Bitter). Les solénoïdes 12 et 13 sont bobinés en utilisant des matériaux supraconducteurs à haute température critique (par exemple Bi 2212).

| solénoïde | a1 (en mm) | a2 (en mm) | b 1 (en mm) | b2 (en mm) | J (A/mm$^2$) |
|---|---|---|---|---|---|
| 11 | 70 | 200 | -100 | 100 | 175 |
| 12 | 35 | 65 | -75 | -45 | 100 |
| 13 | 35 | 65 | -165 | -135 | -100 |

Pour chaque solénoïde, les rayons intérieur et extérieur sont donnés par a1 et a2, et ses cotes suivant l'axe Oz par b1 et b2, ces valeurs pouvant être négatives.

A partir du solénoïde 11, le point O' défini par $\alpha_2$ = 0 correspond à la cote z = -105 mm : en ce point le champ du solénoïde S1 est de 11,3 T, et le gradient de -98 ,2 T/m.

En ajoutant les solénoïdes 12 et 13 aux cotes indiqués dans le tableau ci-dessus, qui crée au point O' un gradient de -25,7 T/m, avec un terme $\alpha_2$ = 0 , on obtient pour la configuration totale G = -2800 T$^2$/m en faisant le produit champ x gradient.

Cette configuration magnétique permet donc de faire léviter un corps diamagnétique de manière stable (la valeur de G ainsi obtenue correspond à la lévitation de l'eau).

La configuration présentée en exemple n'est pas l'unique moyen d'imposer les deux équations de stabilité comme contraintes du problème d'optimisation, mais il s'agit assurément de la géométrie la plus élémentaire. On pourra aussi utiliser d'autres assemblages de bobinages supraconducteurs, parcourus par des courants de même sens ou de sens opposés, éventuellement associés à des pièces ferromagnétiques qui permettraient de garantir les conditions de stabilité.

La méthode de dimensionnement proposée impose alors la stabilité de l'équilibre comme une contrainte tandis que dans tous les dispositifs magnétiques utilisés et/ou dimensionnés jusqu'à aujourd'hui, les conditions de stabilité horizontale et verticale n'étaient pas systématiquement vérifiées. Les travaux antérieurs n'ont jamais intégré cette question de la stabilité de l'équilibre et ont par ailleurs abouti au dimensionnement de structures magnétiques pour lesquelles l'une ou l'autre des deux conditions n'était pas vérifiée !

Ainsi une étude approfondie des aimants proposés dans les deux brevets des références [7] et [8] montre que si la stabilité horizontale est bien vérifiée dans la zone où la force verticale est quasi uniforme, ce n'est pas systématiquement le cas pour la condition de stabilité verticale. :

- L'aimant proposé dans le brevet [7] conduit ainsi à une valeur de G = -3020 T$^2$/m en z = 24 mm, mais dans la zone où G est quasi-uniforme (z = [23 ; 26 mm]), l'équation gouvernant la stabilité verticale varie entre -10000 et +10000 T$^2$/m$^2$.
- L'aimant proposé dans le tableau 1 du brevet [8] conduit à une valeur de G = - 1027 T$^2$/m en z = 87 mm, mais en ce point l'équation gouvernant la stabilité verticale est négative (-8 T$^2$/m$^2$).
- L'aimant proposé dans le tableau 2 du brevet [8] conduit à une valeur de G = - 740 T$^2$/m en z = 190 mm, mais dans la zone où G est quasi-uniforme (z = [150 ; 200 mm]), l'équation gouvernant la stabilité verticale varie entre -200 et +200 T$^2$/m$^2$.

Selon un deuxième mode de réalisation de l'invention, qui est illustré sur la figure 2, on propose un dispositif magnétique associant trois solénoïdes supraconducteurs 111, 112, 113, par exemple en Nb$_3$Sn. L'optimisation des trois solénoïdes 111, 112, 113 a été réalisée pour créer un champ de force magnétique et garantir la stabilité horizontale et verticale de l'équilibre. Pour chaque solénoïde, les rayons intérieur et extérieur sont donnés par a1 et a2, et ses cotes suivant l'axe Oz par b1 et b2.

| solénoïde | a1 (en mm) | a2 (en mm) | b1 (en mm) | b2 (en mm) | J (A/mm$^2$) |
|---|---|---|---|---|---|
| 111 | 50 | 78 | 28 | 108 | -150 |
| 112 | 50 | 188 | -50 | 28 | 150 |
| 113 | 11 | 180 | -135 | -50 | 150 |

Cet ensemble d'aimants permet d'obtenir les profils de champ magnétique et de la composante verticale de $\overrightarrow{grad}(B^2)$ suivants :

En z = 0, on a $G$ = - 2800 T$^2$/m, valeur requise pour faire léviter de l'eau. De plus, pour cette configuration, les conditions de stabilité horizontale sont vérifiées, puisque autour de O, les valeurs des deux équations (18) et (19) restent positives entre z = -10 et z = 5 mm (voir figure 7).

Les structures magnétiques décrites ci-dessus permettent ainsi la lévitation stable de substances diamagnétiques. Les solutions étudiées antérieurement proposaient des aimants qui permettaient d'obtenir des forces magnétiques quasi-uniformes pour réaliser la lévitation, mais sans garantir la stabilité de l'équilibre dans la zone de lévitation.

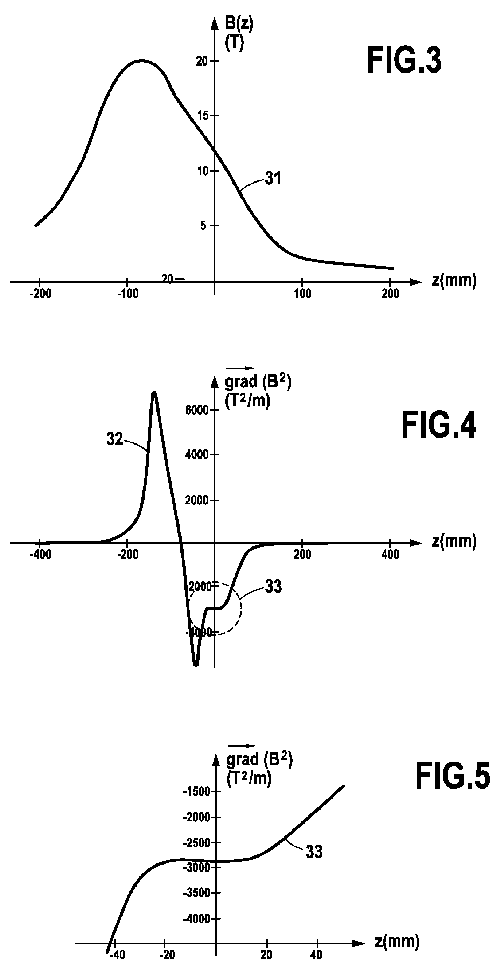

La figure 3 montre une courbe 31 représentant l'induction magnétique B(z) en teslas sur l'axe de révolution Oz du dispositif de la figure 2, la distance z sur l'axe de révolution Oz étant exprimée en mm.

La figure 4 montre une courbe 32 représentant la composante verticale de $\overrightarrow{grad}(B^2)$ en T$^2$/m sur l'axe de révolution Oz, la distance z sur l'axe de révolution Oz étant exprimée en mm.

La figure 5 montre une portion 33 de la courbe 32 de la figure 4 au voisinage de la valeur z=0.

La figure 6 montre la courbe 34 représentant la composante horizontale de $\overrightarrow{grad}(B^2)$ en T$^2$/m au point pour lequel z=0, en fonction du rayon r exprimé en mm.

La figure 7 montre deux courbes Sv, Sh représentant respectivement les conditions de stabilité verticale et horizontale en T$^2$/m$^2$ sur l'axe de révolution Oz, la distance z sur l'axe de révolution Oz étant exprimée en mm.

### Références

[1] « Contribution méthodologique à la conception de systèmes supraconducteurs de la lévitation magnétique « L. Quettier Thèse de l'Institut National Polytechnique de Lorraine, soutenue le 4 juillet 2003.

[2] "Magnetic compensation of gravity forces in liquid/gas mixtures: surpassing intrinsic limitations of a superconducting magnet by using ferromagnetic inserts" L. Quettier, H.Félice, A. Mailfert, D. Chatain, and D. Beysens Eur. Phys. J. Appl. Phys. 32 (2005) p. 167.

[3] "Levitation of organic material" E. Beaugnon, R. Tournier Nature, vol.349, 1991, p 470.

[4] "Materials Science in Static High Magnetic Fields" K. Watanabe, M. Motokawa Collection «Advances in Materials Research» Editions Springer, 2002. ISBN 3-540-41995-0

[5] "Of flying frogs and levitrons" M. V. Berry, A. K. Geim European Journal of Physics, No. 18, pp 307-313, 1997.

[6] "Ferromagnetic Inserts for Magnetic Force Field Generation" O. Vincent-Viry, L. Quettier, J. Levêque, A. Mailfert, D. Chatain IEEE Transactions on Magnetics, Vol. 40, n˚3, May 2004.

[7] "Superconducting levitation magnet" M. Bird et al., US Patent 6,850,137-B2, février 2005.

[8] "Uniform magnetic force generating magnet" T. Kiyoshi *et al.,* US Patent 6,362,712-B1, mars 2002.

### Revendications

**1.** Système magnétique à symétrie de révolution invariant par rotation autour d'un axe de révolution (Oz), pour la création d'une zone de lévitation pour un matériau diamagnétique dans un volume utile essentiellement sphérique de centre (O') situé sur ledit axe de révolution et de rayon R, ce système comportant un premier dispositif magnétique (11 ; 111, 112, 113) adapté pour créer, dans ledit volume utile pour la lévitation, un champ de force magnétique exerçant sur le matériau diamagnétique un champ de force uniforme d'amplitude égale et de direction opposée à la force de gravité s'exerçant sur ce matériau diamagnétique, **caractérisé en ce qu'**il comprend en outre au moins un deuxième dispositif magnétique comprenant au moins deux solénoïdes supraconducteurs (12, 13 ; 111, 112, 113) adaptés pour créer, au centre (O') de la zone de lévitation stable, un gradient de champ dont la valeur est sensiblement égale à la moitié du rapport de la composante verticale du vecteur gradient de densité d'énergie magnétique ($\overrightarrow{grad}((B^2)$ sur l'induction magnétique B(z) au point O', **en ce que** les premier et deuxième dispositifs magnétiques sont dimensionnés pour créer au centre (O') de ladite zone de lévitation stable un gradient de champ tel que la composante verticale G du vecteur gradient de densité d'énergie magnétique ($\overrightarrow{grad}(B^2)$ présente une valeur au moins égale à la valeur G du module de la composante verticale du vecteur de densité d'énergie magnétique dudit matériau diamagnétique et la composante horizontale de ce vecteur gradient de densité d'énergie magnétique ($\overrightarrow{grad}(B^2)$) soit nulle ou quasi nulle, et **en ce que** les premier et deuxième dispositifs magnétiques sont tels que les dérivées secondes ($\alpha_2$) de l'induction magnétique B(z) par rapport à z au centre (O') de ladite zone de lévitation stable sont nulles tandis que les dérivées premières ($\alpha_1$) de l'induction magnétique B(z) par rapport à z au centre (O') de la zone de lévitation stable sont différentes de zéro afin de garantir les conditions de stabilité horizontale et de stabilité verticale de l'équilibre de la lévitation d'un matériau diamagnétique dans ladite zone de lévitation stable.

2. Système magnétique selon la revendication 1, **caractérisé en ce que** le premier dispositif magnétique (11, 111, 112, 113) comprend au moins un solénoïde supraconducteur pour créer ledit champ de force magnétique présentant au centre o' de ladite zone de lévitation, une induction magnétique B(z) dont la valeur est supérieure à une valeur

$$B_0 = \frac{1}{2}\sqrt{\frac{3GR}{2\varepsilon_r + \varepsilon_z}}$$

où R est le rayon de la zone utile, $\varepsilon_r$ et $\varepsilon_z$ sont les homogénéités radiale et verticale et G est le module de la composante verticale du vecteur gradient de densité d'énergie magnétique dudit matériau diamagnétique, avec

$G = \frac{\mu_0 \rho}{|\chi_m|}\left\|\overrightarrow{g}\right\|$, où $\mu_0$ est la perméabilité magnétique du vide, $\chi_m$ est la susceptibilité magnétique du matériau diamagnétique, p est la masse volumique dudit matériau et g est le vecteur gravité.

3. Système magnétique selon la revendication 1 ou la revendication 2, **caractérisé en ce que** le premier dispositif magnétique comprend un premier solénoïde supraconducteur (11) à symétrie de révolution autour dudit axe de révolution ($O_z$) avec un plan médian dont l'intersection avec ledit axe de révolution ($O_z$) est située sur un point (O) distinct du centre (O') de ladite zone de lévitation stable, ledit premier solénoïde supraconducteur (11) étant adapté pour créer ledit champ de force magnétique quasi homogène et le point (O') choisi pour la lévitation étant le point de l'axe de révolution ($O_z$) pour lequel la dérivée seconde ($\alpha_2$) de l'induction magnétique B(z) par rapport à z est nulle, et **en ce que** le deuxième dispositif magnétique comprend des deuxième et troisième solénoïdes supraconducteurs (12, 13) à symétrie de révolution autour dudit axe de révolution ($O_z$) et disposés symétriquement par rapport à un plan perpendiculaire à l'axe de révolution ($O_z$) et dont l'intersection avec cet axe de révolution ($O_z$) est située au centre (O') de ladite zone de lévitation stable, lesdits deuxième et troisième solénoïdes supraconducteurs (12, 13) étant placés en configuration de Helmholtz et alimentés en courant en sens opposés de manière à créer au centre (O') de ladite zone de lévitation stable ledit gradient de champ permettant d'obtenir l'annulation de la dérivée seconde ($\alpha_2$) de l'induction magnétique B(z) par rapport à z, de telle sorte que soient respectées lesdites conditions de stabilité horizontale et de stabilité verticale de l'équilibre de la lévitation d'un matériau diamagnétique dans ladite zone de lévitation stable.

4. Système magnétique selon la revendication 3, **caractérisé en ce que** le premier solénoïde (11) comprend un bobinage hybride utilisant des bobines de type Bitter pour créer un champ de force magnétique quasi homogène présentant une induction magnétique B(z) dont la valeur au centre (O) de ce premier solénoïde (11), est supérieure ou égale à ladite valeur $B_0 = \frac{1}{2}\sqrt{\frac{3GR}{2\varepsilon_r + \varepsilon_z}}$ .

5. Système magnétique selon la revendication 3 ou la revendication 4, **caractérisé en ce que** les deuxième et troisième solénoïdes supraconducteurs (12, 13) sont bobinés en utilisant des matériaux supraconducteurs à haute température critique.

6. Système magnétique selon la revendication 4, **caractérisé en ce que** le matériau diamagnétique à faire léviter est de l'eau ou un corps diamagnétique ayant une susceptibilité magnétique massique proche de celle de l'eau, **en ce que** le volume essentiellement sphérique où l'homogénéité du champ de force magnétique est inférieure ou égale à 2% dans les directions horizontale et verticale, est sensiblement égal à 1 cm$^3$ et **en ce que** l'induction magnétique B(z) au centre (O) de ce premier solénoïde (11) est supérieure ou égale à 16,5 T.

**7.** Système magnétique selon la revendication 1 ou la revendication 2, **caractérisé en ce que** les premier et deuxième dispositifs magnétiques comprennent des premier, deuxième et troisième solénoïdes supraconducteurs (111, 112, 113) superposés et présentant chacun une symétrie de révolution autour dudit axe de révolution (O$_z$), le deuxième solénoïde supraconducteur (112) constituant un solénoïde intermédiaire situé au niveau du centre (O) de la zone de lévitation stable, les deuxième et troisième solénoïdes supraconducteurs (112, 113) présentant un rayon extérieur très supérieur à celui du premier solénoïde supraconducteur (111) tandis que les hauteurs des premier, deuxième et troisième solénoïdes supraconducteurs (111, 112, 113) selon l'axe de révolution (O$_z$) présentent des valeurs égales ou voisines, de telle sorte que le champ de force magnétique, le gradient de champ et les conditions de stabilité horizontale et verticale de l'équilibre de la lévitation d'un matériau diamagnétique dans ladite zone de lévitation stable sont créés par l'ensemble des premier, deuxième et troisième solénoïdes supraconducteurs (111, 112, 113).

**8.** Système magnétique selon la revendication 7, **caractérisé en ce que** les premier, deuxième et troisième solénoïdes supraconducteurs (111, 112, 113) sont en Nb$_3$Sn.

**9.** Système magnétique selon l'une quelconque des revendications 1 à 8, **caractérisé en ce qu'**il est adapté à la lévitation stable d'un matériau diamagnétique constitué par de l'eau ou une solution aqueuse, dont la valeur (G) dudit module de la composante verticale du vecteur de densité d'énergie magnétique dudit matériau diamagnétique s'écarte de -2800 T$^2$/m d'une valeur qui est compensée par une modification du courant dans lesdits solénoïdes n'entraînant pas une transition de l'état supraconducteur à l'état normal d'un des éléments supraconducteurs du système magnétique.

FIG.1

FIG.2

**FIG.3**

$B(z)$
$(T)$

20

15

10

5

31

-200    -100    100    200    $z(mm)$

20 —

**FIG.4**

$\overrightarrow{grad}\,(B^2)$
$(T^2/m)$

6000

4000

2000

32

-400    -200    200    400    $z(mm)$

2000

33

-4000

**FIG.5**

$\overrightarrow{grad}\,(B^2)$
$(T^2/m)$

-1500

-2000

-2500

33

-3000

-3500

-4000

-40    -20    20    40    $z(mm)$

15

FIG.6

FIG.7

FIG.8

FIG.9

FIG.10

FIG.11

FIG.12

FIG.13

Europäisches
Patentamt

European
Patent Office

Office européen
des brevets

**RAPPORT PARTIEL
DE RECHERCHE EUROPEENNE**

qui selon la règle 63 de la Convention sur le brevet
européen est consideré, aux fins de la procédure ultérieure,
comme le rapport de la recherche européenne

Numéro de la demande

EP 08 16 7928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| D,X | US 2004/113503 A1 (BIRD MARK D [US] ET AL) 17 juin 2004 (2004-06-17) * le document en entier * ----- | 1-3,7 | INV. H01F6/06 H01L39/00 H02N15/04 |
| D,X | US 6 362 712 B1 (KIYOSHI TSUKASA [JP] ET AL) 26 mars 2002 (2002-03-26) * le document en entier * ----- | 1-4,7 | |
| X | CLEMENT LORIN ET AL: "Design and Optimization by zn Complex Function of Magnet Electric Poles in order to obtain Magnetic Levitation" IEEE INDUSTRIAL ELECTRONICS, IECON 2006 - 32ND ANNUAL CONFERENCE ON, IEEE, PISCATAWAY, NJ, USA, 1 novembre 2006 (2006-11-01), pages 1035-1041, XP031077522 ISBN: 978-1-4244-0135-2 | 1,2,7,9 | |
| A | * le document en entier * ----- -/-- | 6 | |

**DOMAINES TECHNIQUES
RECHERCHES (IPC)**

H01F
H01L
H02N

### RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| Munich | 26 février 2009 | von Rauch, Marianne |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................................
& : membre de la même famille, document correspondant

EPO FORM 1503 03.82 (P04E08)

Europäisches
Patentamt

European
Patent Office

Office européen
des brevets

**RAPPORT PARTIEL
DE RECHERCHE EUROPEENNE**

Numero de la demande

EP 08 16 7928

| | DOCUMENTS CONSIDERES COMME PERTINENTS | | CLASSEMENT DE LA DEMANDE (IPC) |
|---|---|---|---|
| Catégorie | Citation du document avec indication, en cas de besoin, des parties pertinentes | Revendication concernée | |
| X | MAILFERT A ET AL: "New design of a superconducting magnet for generation of quasi-uniform magnetic force field" IEEE TRANSACTIONS ON APPLIED SUPERCONDUCTIVITY, IEEE SERVICE CENTER, LOS ALAMITOS, CA, US, vol. 13, no. 2, 1 juin 2003 (2003-06-01), pages 1608-1611, XP011098261 ISSN: 1051-8223 | 1-4,6-9 | |
| Y | * le document en entier *<br>----- | 1-4,9 | |
| Y | VINCENT-VIRY O ET AL: "New SMES Coil Configurations" IEEE TRANSACTIONS ON APPLIED SUPERCONDUCTIVITY, IEEE SERVICE CENTER, LOS ALAMITOS, CA, US, vol. 11, no. 1, 1 mars 2001 (2001-03-01), pages 1916-1919, XP011090710 ISSN: 1051-8223 * le document en entier *<br>----- | 1-4,9 | DOMAINES TECHNIQUES RECHERCHES (IPC) |
| X | OSAMU OZAKI ET AL: "Design Study of Superconducting Magnets for Uniform and High Magnetic Force Field Generation" IEEE TRANSACTIONS ON APPLIED SUPERCONDUCTIVITY, IEEE SERVICE CENTER, LOS ALAMITOS, CA, US, vol. 11, no. 1, 1 mars 2001 (2001-03-01), pages 2252-2255, XP011090792 ISSN: 1051-8223 | 1-5,7 | |
| A | * le document en entier *<br>-----<br><br>-/-- | 8 | |

EPO FORM 1503 03.82 (P04C11)

**Europäisches Patentamt**
**European Patent Office**
**Office européen des brevets**

## RAPPORT PARTIEL
## DE RECHERCHE EUROPEENNE

Numero de la demande

EP 08 16 7928

| | DOCUMENTS CONSIDERES COMME PERTINENTS | | CLASSEMENT DE LA DEMANDE (IPC) |
|---|---|---|---|
| Catégorie | Citation du document avec indication, en cas de besoin, des parties pertinentes | Revendication concernée | |
| A | JEAN LEVEQUE ET AL: "Design of a superconducting insert to obtain a high and quasi-uniform magnetic force field; Design of a superconducting insert to obtain a high and quasi-uniform magnetic force field" SUPERCONDUCTOR SCIENCE AND TECHNOLOGY, IOP PUBLISHING, TECHNO HOUSE, BRISTOL, GB, vol. 18, no. 10, 1 octobre 2005 (2005-10-01), pages 1266-1270, XP020087978 ISSN: 0953-2048 * le document en entier * | 1-9 | |
| A | TAKAHASHI ET AL: "Materials processing in magnetic levitation furnaces" SCIENCE AND TECHNOLOGY OF ADVANCED MATERIALS, ELSEVIER, OXFORD, GB, vol. 7, no. 4, 1 mai 2006 (2006-05-01), pages 346-349, XP005497188 ISSN: 1468-6996 * le document en entier * | 1,2,4,6, 7,9 | DOMAINES TECHNIQUES RECHERCHES (IPC) |

EPO FORM 1503 03.82 (P04C11)

Europäisches
Patentamt

European
Patent Office

Office européen
des brevets

**RECHERCHE INCOMPLETE**
**FEUILLE SUPPLEMENTAIRE C**

Numéro de la demande

EP 08 16 7928

Revendications ayant fait l'objet de recherches incomplètes:
        1-9

Revendications n'ayant pas fait l'objet de recherches:
        -

Raison pour la limitation de la recherche:

Les revendications 1 à 9 présentent a trait à un système magnétique de révolution invariant par rotation autour d'un axe de révolution qui est défini en faisant référence à un effet ou une propriété souhaitable, à savoir une zone de lévitation stable, un champ de force magnétique uniforme ou un volume utile de centre. Cependant, la description ne fournit aucun fondement et exposé au sens de l'article 84 et 83 CBE pour un tel système magnétique possédant cet effet ou propriété, et l'homme du métier n'a pas à sa disposition de connaissances générales lui permettant de l'obtenir. La non-conformité avec les exigences quant au fond est telle qu'une recherche significative portant sur l'ensemble de l'objet revendiqué n'a pas pu être effectuée (règle 63 CBE et Directives B-VIII, 3.).

La recherche portant sur la revendication 1 a été limitée aux systèmes magnétiques possédant la propriété ou l'effet souhaité et au concept plus général d'un système magnétique possédant cette propriété ou cet effet souhaitable. Par conséquent, la recherche a été limitée à :

Un système magnétique à symétrie de révolution invariant par rotation autour d'un axe de révolution (Oz), pour la création d'une lévitation stable d'un matériau diamagnétique dans un volume de centre (O') situé sur ledit axe de révolution et de rayon R, comprenant:
- au moins un premier dispositif magnétique comprenant au moins un solénoïde supraconducteur adapté pour créer un champ de force magnétique présentant, au volume de centre une lévitation, grâce à une induction magnétique B(z)
- au moins un deuxième dispositif magnétique comprenant au moins deux solénoïdes supraconducteurs adaptés pour créer, au volume de centre une lévitation, grâce à l'induction magnétique B(z),
- et les premier et deuxième dispositifs magnétiques sont dimensionnés pour créer une lévitation, donc le champ de force magnétique dans ledit volume de centre est le plus homogène que possible.

**EP 2 056 306 A1**

**ANNEXE AU RAPPORT DE RECHERCHE EUROPEENNE**
**RELATIF A LA DEMANDE DE BREVET EUROPEEN NO.**

EP 08 16 7928

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-02-2009

| Document brevet cité au rapport de recherche | Date de publication | Membre(s) de la famille de brevet(s) | Date de publication |
|---|---|---|---|
| US 2004113503 A1 | 17-06-2004 | AUCUN | |
| US 6362712 B1 | 26-03-2002 | EP 1079399 A1<br>WO 9960584 A1<br>JP 3959489 B2<br>JP 11329835 A | 28-02-2001<br>25-11-1999<br>15-08-2007<br>30-11-1999 |

EPO FORM P0460

Pour tout renseignement concernant cette annexe : voir Journal Officiel de l'Office européen des brevets, No.12/82

22

## RÉFÉRENCES CITÉES DANS LA DESCRIPTION

**Documents brevets cités dans la description**

- US 6850137 B2, M. Bird

- US 6362712 B1

**Littérature non-brevet citée dans la description**

- **L. QUETTIER.** Contribution méthodologique à la conception de systèmes supraconducteurs de la lévitation magnétique. *Thèse de l'Institut National Polytechnique de Lorraine,* 04 Juillet 2003
- **L. QUETTIER ; H.FÉLICE ; A. MAILFERT ; D. CHATAIN ; D. BEYSENS.** Magnetic compensation of gravity forces in liquid/gas mixtures: surpassing intrinsic limitations of a superconducting magnet by using ferromagnetic inserts. *Eur. Phys. J. Appl. Phys.,* 2005, vol. 32, 167
- **E. BEAUGNON ; R. TOURNIER.** Levitation of organic material. *Nature,* 1991, vol. 349, 470

- Materials Science in Static High Magnetic Fields. **K. WATANABE ; M. MOTOKAWA.** Advances in Materials Research. Editions Springer, 2002
- **M. V. BERRY ; A. K. GEIM.** Of flying frogs and levitrons. *European Journal of Physics,* 1997, 307-313
- **O. VINCENT-VIRY ; L. QUETTIER ; J. LEVÊQUE ; A. MAILFERT ; D. CHATAIN.** Ferromagnetic Inserts for Magnetic Force Field Generation. *IEEE Transactions on Magnetics,* Mai 2004, vol. 40 (3